# EUROPEAN PATENT APPLICATION

(11) **EP 3 723 216 A1**
(43) Date of publication of application: **14.10.2020**
(21) Application number: 18885920.1
(22) Date of filing: 04.12.2018
(51) Int. Cl.: H02G 5/06

(54) **INSULATION SPACER**

(30) Priority: 04.12.2017 WO PCT/JP2017/043495
(71) Applicant: Kabushiki Kaisha Toshiba, Minato-ku Tokyo 105-8001 (JP); Toshiba Energy Systems & Solutions Corporation, Kawasaki-shi, Kanagawa 212-0013 (JP)
(72) Inventor: YASUOKA, Takanori, Tokyo 105-0023 (JP); NAKANO, Toshiyuki, Tokyo 105-0023 (JP); TASAKI, Morihiko, Kawasaki-shi Kanagawa 212-0013 (JP); SHIIKI, Motoharu, Kawasaki-shi Kanagawa 212-0013 (JP); TAKEI, Masafumi, Kawasaki-shi Kanagawa 212-0013 (JP); HOSHINA, Yoshikazu, Tokyo 105-0023 (JP)
(74) Representative: Henkel & Partner mbB
(86) International application number: PCT/JP2018/044554
(87) International publication number: WO 2019/111891

(57) **Abstract**

The insulation spacer of the present embodiment supports connection between a high voltage conductor of a gas insulated switchgear and a metal container of the gas insulated switchgear. The insulation spacer comprises a nonlinear dielectric material with dielectric constant which increases with increase in electric field. The nonlinear dielectric material comprises a matrix resin filled with a first filler and a second filler. The matrix resin is an epoxy compound having at least two epoxy groups per molecule. The first filler is barium titanate. The second filler is silica or alumina.

## Description

### TECHNICAL FIELD

The present invention relates to an insulation spacer.

### BACKGROUND ART

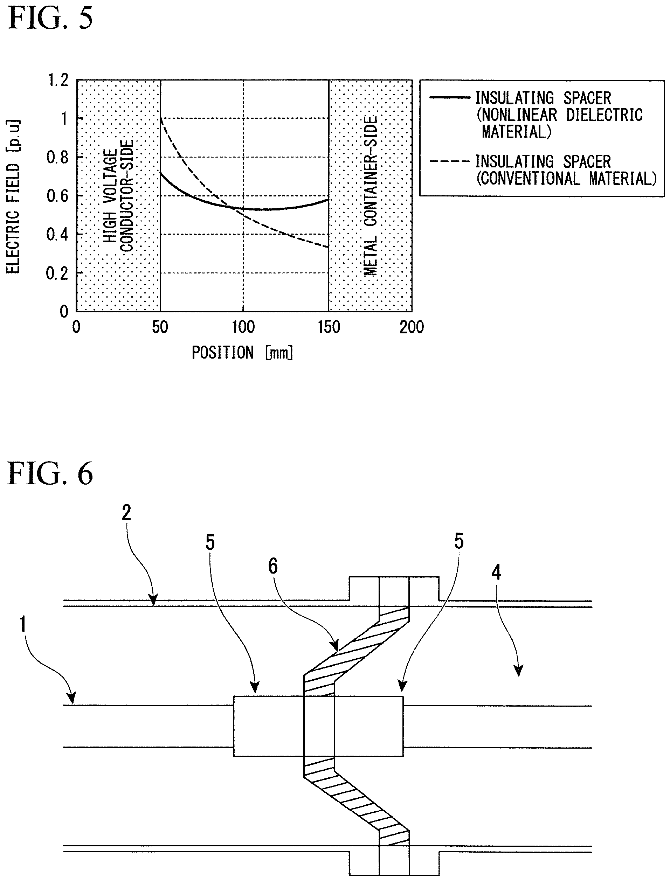

Currently, a gas insulated switchgear using sulfur hexafluoride (SF₆) gas as an insulating and quenching medium is widely used in high voltage, high capacity power systems. Referring now to FIG. 6, an example of configuration of a conventional gas insulated switchgear is explained below. As shown in FIG. 6, a gas insulated bus, which is one of the devices constituting a gas insulated switchgear, has a metal container 2; a high voltage conductor 1 for current flow, which is inserted and extends within the metal container 2; and an insulating gas 4 sealed inside the metal container 2 together with the high voltage conductor 1. The high voltage conductor 1 and the metal container 2 together form a coaxial dual cylinder structure. An insulation spacer 6 is attached to the high voltage conductor 1. The insulation spacer 6 insulates and supports the high voltage conductor 1. An electric field mitigation shield 5 is provided in the vicinity of the insulation spacer 6. Generally, the insulation spacer 6 is formed of a resin composition including an epoxy resin and a filler such as alumina or silica blended with the epoxy resin. The insulation spacer 6 is produced by cast molding of the aforementioned resin composition.

The electric field distribution in the vicinity of the insulation spacer 6, which is a decisive factor in setting the size of the gas insulated bus, depends on the geometry of the high voltage conductor 1, the insulation spacer 3 and the field mitigation shield 5 as well as the dielectric constants of the insulation spacer 6 and the insulating gas 4. As for the gas insulated bus, reduction of the maximum electric field value of the surface of the insulation spacer 6 is important to improve the performance of the device and to reduce the size of the device. Therefore, attempts have been made to optimize the shape of the insulation spacer 6 and to reduce the dielectric constant of the insulation spacer 6, but the technological development for this purpose has been approaching its limit. The shape of the insulation spacer 6 is a complicated conical shape in order to increase the creepage distance, which requires high technology and manufacturing cost for mold design and casting.

If the dielectric constant of the insulation spacer 6 can be spatially varied at will, it becomes possible to reduce the maximum electric field value on the surface of the insulation spacer 6. This enables the miniaturization of the gas insulated switchgear, which is accompanied by reduction of equipment costs. As a conventional technique for solving the technical problem of spatially varying the dielectric constant of an insulation spacer 6 produced by cast molding, for example, a method is known, which prepares a plurality of materials for casting, which contain different amounts of epoxy resin and fillers, and heat-molds an insulation spacer while continuously varying the proportions of the materials.

### Description of Prior Art

### Patent Document

Patent Document 1: Japanese Unexamined Patent Application Publication No. 2010-176969

### DISCLOSURE OF INVENTION

### Problems to be Solved by the Invention

The problem to be solved by the present invention is to provide an insulation spacer that enables the miniaturization of a gas insulated switchgear and improves insulation performance of the gas insulated switchgear.

### Means to Solve the Problems

The insulation spacer of the present embodiment supports connection between a high voltage conductor of a gas insulated switchgear and a metal container of the gas insulated switchgear. The insulation spacer comprises a nonlinear dielectric material with dielectric constant which increases with increase in electric field. The nonlinear dielectric material comprises a matrix resin filled with a first filler and a second filler. The matrix resin is an epoxy compound having at least two epoxy groups per molecule. The first filler is barium titanate. The second filler is silica or alumina.

### BRIEF DESCRIPTION OF THE DRAWINGS

FIG. 1 is a cross-sectional view of a gas insulated switchgear having an insulation spacer of the present embodiment, in the vicinity of a gas insulated bus.
FIG. 2 is a diagram showing the field relaxation effect and viscosity characteristics of a nonlinear dielectric material including an epoxy resin filled with barium titanate and fused silica.
FIG. 3 is an analytical model diagram of the gas insulated bus around the insulation spacer studied for field relaxation effect.
FIG. 4 is a diagram showing the measured data of electric field and dielectric constant of nonlinear dielectric materials.
FIG. 5 is a diagram showing the results of comparison of electric field values on the surfaces of insulation spacers by electric field analysis.
FIG. 6 is a cross-sectional view of a conventional gas insulated switchgear in the vicinity of a gas insulated bus.

### DESCRIPTION OF THE EMBODIMENTS

The insulation spacer of the present embodiment is described below with reference to the drawings. The same configurations as in the gas insulated bus shown in FIG. 6 are shown with the same reference signs, and the explanations thereof are omitted.

### [Insulation spacer]

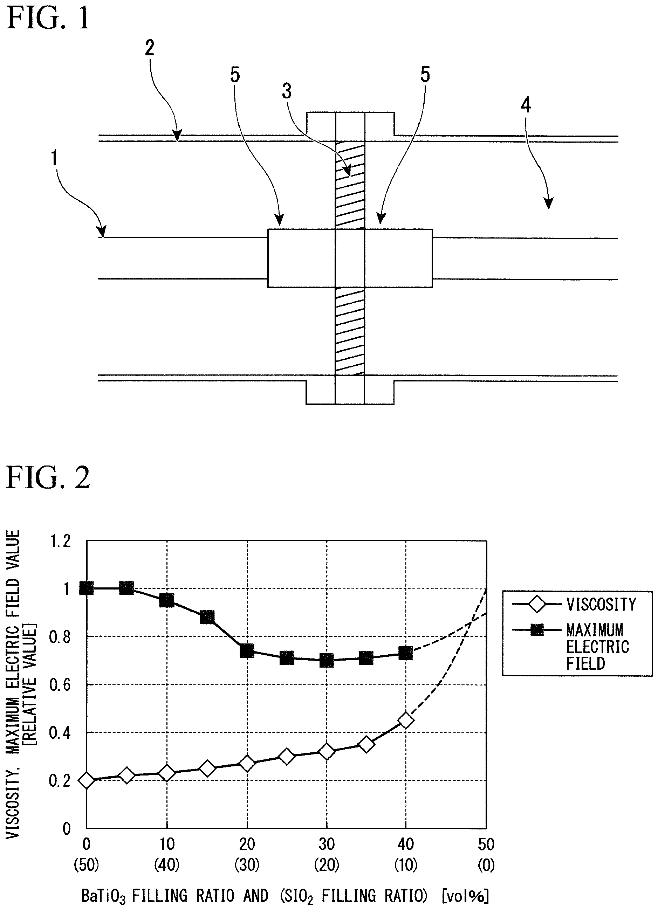

FIG. 1 is a cross-sectional view of a gas insulated switchgear having the insulation spacer of the present embodiment, in the vicinity of a gas insulated bus. In FIG. 1, the same configurations as in the gas insulated bus shown in FIG. 6 are shown with the same reference signs, and the explanations thereof are omitted.

As shown in FIG. 1, the gas insulated bus, which is one of the devices constituting the gas insulated switchgear, has a high voltage conductor 1, a metal container 2, an insulation spacer 3, an insulating gas 4, and an electric field mitigation shield 5.

The insulation spacer 3 supports connection between the high voltage conductor 1 and the metal container 2.

The insulation spacer 3 includes a nonlinear dielectric material with dielectric constant which increases with increase in electric field.

The nonlinear dielectric material includes a matrix resin filled with a first filler and a second filler.

The insulation spacer 3 is produced by cast molding using the nonlinear dielectric material.

The matrix resin is an epoxy compound having at least two epoxy groups per molecule. Examples of the epoxy compound include bisphenol A epoxy resins, bisphenol F epoxy resins, bisphenol AD epoxy resins, alicyclic epoxy resins, biphenyl epoxy resins, hydrogenated bisphenol A epoxy resins, and heterocyclic epoxy resins such as triglycidyl isocyanate and hydantoin epoxy resins. One of these epoxy compounds may be used alone, or two or more of them may be used in the form of a mixture thereof. Among these epoxy compounds, bisphenol A epoxy resins with epoxy equivalents of 125 to 500 are preferred for the production of the insulation spacer 3 by cast molding.

The nonlinear dielectric material used in the present embodiment may contain any known curing agent for epoxy resins. Examples of the curing agent for epoxy resins include aliphatic or aromatic acid anhydrides, carboxylic acids, amines, phenols, and the like, which are generally used as curing agents for epoxy resins. One of these curing agents may be used alone, or two or more of them may be used in the form of a mixture thereof. Among these curing agents for epoxy resins, especially preferred from the perspective of longer pot life and less heat generation during curing are acid anhydrides such as phthalic anhydride, hexahydrophthalic anhydride, methylhexahydrophthalic anhydride, tetrahydrophthalic anhydride, methyltetrahydrophthalic anhydride, nadic anhydride, methyl nadic anhydride and the like. Among these acid anhydrides, methylhexahydrophthalic anhydride and methyltetrahydronadic anhydride are further more preferable from the perspective of longer pot life and faster curing, which are advantageous in terms of workability, as well as superior properties of the cured product as compared to the case where other curing agents are used.

The amount of the curing agent for epoxy resins is preferably 0.7 equivalents to 0.9 equivalents per equivalent of the epoxy compound. When the amount of the curing agent for epoxy resins is 0.7 equivalents or more per equivalent of the epoxy compound, the decline of the environmental resistance of the insulation spacer 3, such as heat resistance and moisture resistance, can be prevented. On the other hand, when the amount of the curing agent for epoxy resins is 0.9 equivalents or less per equivalent of the epoxy compound, the decline of the chemical heat resistance and electrical properties of the insulation spacer 3 can be prevented.

As the first filler, barium titanate (BaTiO₃) is used.

The dielectric constant of barium titanate is 100 or more, though it varies depending on temperature, electric field and crystallinity.

The average particle diameter of barium titanate as the first filler is preferably 0.1 µm to 15 µm. With the average particle diameter of 0.1 µm or more, agglomeration of barium titanate can be suppressed, thereby preventing barium titanate from becoming the cause of mechanical or electrical failure of the cured resin product. On the other hand, with the average particle diameter of 15 µm or less, barium titanate, which has a greater specific gravity than the epoxy resin, does not settle during the curing process, thereby allowing for a required electric field nonlinearity of the dielectric constant.

In this context, the average particle diameter of the first filler can be determined, for example, by observing a certain cross section of a resin (cured product) having the first filler dispersed therein with a scanning electron microscope (SEM), measuring the respective particle diameters of the first filler particles, and arithmetically averaging the particle diameters.

The surface of the first filler may be may be treated by a titanate coupling treatment or a silane coupling treatment. By subjecting the first filler to such a surface treatment, the wettability of the first filler with respect to the matrix resin, which is the main component of the nonlinear dielectric material, can be improved.

The filling ratio of the first filler in the nonlinear dielectric material is preferably 10 % by volume to 45 % by volume.

When the filling ratio of the first filler in the nonlinear dielectric material is within the range described above, remarkable field nonlinearity occurs in the nonlinear dielectric material in the electric field region. In this context, the electric field nonlinearity means such a property that the dielectric constant increases as the electric field increases.

As the second filler, silica (SiO₂) or alumina (Al₂O₃) is used.

As the second filler, a material with a lower dielectric constant than barium titanate as the first filler is used. Therefore, the second filler has a less influence on the dielectric constant of the electric field. For this reason, the purpose of the second filler is to improve the mechanical strength and to control the thermal expansion coefficient of the insulation spacer 3.

The average particle diameter of the second filler is determined in view of its interaction with the average particle diameter of the first filler, and is appropriately 1 µm to 30 µm.

The average particle diameter of the second filler can be determined, for example, by observing a certain cross section of a resin (cured product) having the second filler dispersed therein with a scanning electron microscope (SEM), measuring the respective particle diameters of the second filler particles, and arithmetically averaging the particle diameters.

The second filler is preferably a fused silica with an average particle diameter of 1 µm to 30 µm.

The second filler is preferably filled in an amount such that a total filling ratio of the first filler and the second filler in the nonlinear dielectric material falls within a range of 35 % by volume to 55 % by volume.

When the total filling ratio is 35 % by volume or more, the insulation spacer 3 can be imparted with such an elastic modulus of a cured product as required of a structural material. When the total filling ratio is 55 % by volume or less, significant increase in the viscosity of the nonlinear dielectric material can be prevented and hence the casting operation can be easily performed.

The nonlinear dielectric material used in the present embodiment may further include other fillers than the first and second fillers.

As for the other fillers, any type of fillers may be used as long as the casting process for the insulation spacer 3 using the nonlinear dielectric material is not adversely affected. Examples of the other fillers include particulate fillers and fibrous fillers. Examples of the particulate fillers include talc, calcium carbonate, aluminum hydroxide, kaolinite, clay, dolomite, mica powder, silicon carbide, glass powder, carbon, graphite, barium sulfate, boron nitride, silicon nitride, and the like. Examples of the fibrous fillers include wollastonite, potassium titanate whiskers, glass fibers, alumina fibers, silicon carbide fibers, boron fibers, carbon fibers, aramid fibers, phenolic fibers, and the like. One of these fillers may be used alone, or two or more of these may be used in combination.

The nonlinear dielectric material in the present embodiment may be, if necessary, blended with additives such as a flame retardant, a release agent, an anti-settling agent, an interfacial modifier represented by a silane coupling agent or a titanate coupling agent, a defoaming agent, a curing accelerator, an antioxidant, a pigment, a dye, micro-rubber particles, and the like.

A representative example of the insulating gas 4 to be sealed in the metal container 2 is sulfur hexafluoride (SF6). However, the insulating gas 4 may be a gas other than sulfur hexafluoride (SF₆). Examples of the insulating gas 4 other than sulfur hexafluoride include air, carbon dioxide, oxygen, and nitrogen, which are naturally occurring gases. One of these gases may be used alone, or two or more of these may be used in combination as a mixed gas.

In the embodiment described above, the insulation spacer 3 includes a nonlinear dielectric material with dielectric constant which increases with increase in electric field. Because of this feature, the electric field dependence of the dielectric constant possessed by the nonlinear dielectric material itself allows the dielectric constant of the insulation spacer 3 to appear as if spatially inclined, thereby suppressing the maximum electric field value on the surface of the insulation spacer 3. As a result, the insulation spacer can contribute to the miniaturization and improvement of insulation of a gas insulated switchgear.

### EXAMPLES

Hereinbelow, the present invention will be described with reference to the Experimental Example, Examples and Comparative Examples which, however, should not be construed as limiting the present invention.

Since the dielectric constant of barium titanate as the first filler has electric field nonlinearity, the electric field nonlinearity of the dielectric constant is exhibited even in the form of a composite material thereof with an epoxy resin which constitutes the matrix.

### [Experimental Example 1]

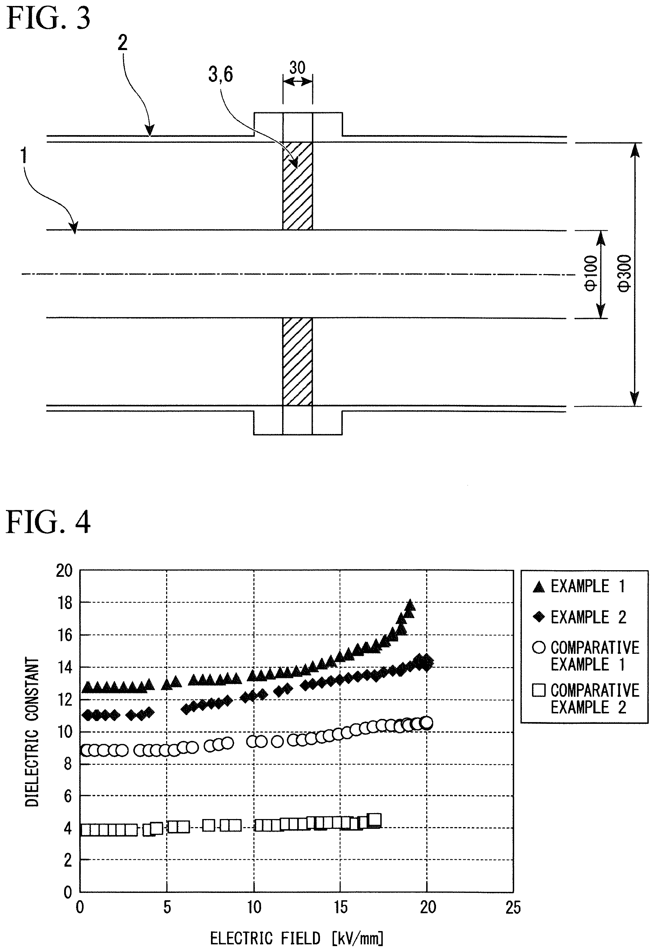

FIG. 2 shows the field relaxation effect and the viscosity of a nonlinear dielectric material (resin composition) including an epoxy resin filled with barium titanate (BaTiO₃) and fused silica (SiO₂), normalized with the corresponding properties of a material filled with 50 % by volume of fused silica only. FIG. 3 shows an analytical model of the gas insulated bus around the insulation spacer 3 which has been studied for the field relaxation effect.

With respect to the model shown in FIG. 3, where a disk-shaped insulation spacer 3 with a thickness of 30 mm is placed between a high voltage conductor 1 with a diameter of 100 mm and a metal container 2 with a diameter of 300 mm, insulation spacers 3 are fabricated while changing the filling ratio of barium titanate and fused silica to analyze the electric field distribution on the surfaces of the insulation spacers 3, and the electric field relaxation effect is evaluated in terms of the maximum electric field value.

From the results shown in FIG. 2, it was found that when the filling ratio of barium titanate in the nonlinear dielectric material is 20 % by volume to 40 % by volume, a remarkable electric field nonlinearity of the dielectric constant occurs. Further, from the results shown in FIG. 2, it was also found that the viscosity of the nonlinear dielectric material increases markedly when the filling ratio of barium titanate in the nonlinear dielectric material exceeds 40 % by volume.

### [Example 1]

A resin composition was prepared, which contained 70 parts by mass of a bisphenol A epoxy resin, product name: JER828 (manufactured by Mitsubishi Chemical Corporation, epoxy equivalent 190), 30 parts by mass of an alicyclic epoxy resin, product name: Celloxide 2021P (manufactured by Daicel Corporation), 90 parts by mass of methylhexahydrophthalic anhydride as an acid anhydride curing agent, product name: HN5500 (manufactured by Hitachi Chemical Co., Ltd.), and 0.5 parts by mass of quaternary ammonium salt as a curing accelerator, product name: Nissan Cation M2-100 (manufactured by Nippon Oil & Fats Co., Ltd.).

25 % by volume of barium titanate (manufactured by KCM Corporation) with an average particle diameter of 5 µm and 25 % by volume of fused silica with an average particle diameter of 19 µm, product name FB24 (manufactured by Denka Company Limited) were blended into the resin composition to prepare a nonlinear dielectric material composition (A).

Then, the nonlinear dielectric material composition (A) was vacuum-cast into a mold with model electrodes for evaluating electric field and dielectric constant, which had been preheated at 100 °C, to produce a cast product (A) for electrical tests under a primary curing condition of 100 °C for 3 hours and a secondary curing condition of 150 °C for 10 hours.

The glass transition temperature (Tg) of the nonlinear dielectric material composition (A) after the secondary curing was measured by the differential scanning calorimetry (DSC), and found to be 150 °C.

### [Example 2]

A resin composition was prepared, which contained 70 parts by mass of a bisphenol A epoxy resin, product name: JER828 (manufactured by Mitsubishi Chemical Corporation, epoxy equivalent 190), 30 parts by mass of an alicyclic epoxy resin, product name: Celloxide 2021P (manufactured by Daicel Corporation), 90 parts by mass of methylhexahydrophthalic anhydride as an acid anhydride curing agent, product name: HN5500 (manufactured by Hitachi Chemical Co., Ltd.), and 0.5 parts by mass of quaternary ammonium salt as a curing accelerator, product name: Nissan Cation M2-100 (manufactured by Nippon Oil & Fats Co., Ltd.).

20 % by volume of barium titanate (manufactured by KCM Corporation) with an average particle diameter of 2 µm and 30 % by volume of fused silica with an average particle diameter of 19 µm, product name FB24 (manufactured by Denka Company Limited) were blended into the resin composition to prepare a nonlinear dielectric material composition (B).

Then, the nonlinear dielectric material composition (B) was vacuum-cast into a mold with model electrodes for evaluating electric field and dielectric constant, which had been preheated at 100 °C, to produce a cast product (B) for electrical tests under a primary curing condition of 100 °C for 3 hours and a secondary curing condition of 150 °C for 10 hours.

The glass transition temperature (Tg) of the nonlinear dielectric material composition (B) after the secondary curing was measured by the differential scanning calorimetry (DSC), and found to be 150 °C.

### [Comparative Example 1]

A resin composition was prepared, which contained 70 parts by mass of bisphenol A epoxy resin, product name: JER828 (manufactured by Mitsubishi Chemical Corporation, epoxy equivalent 190), 30 parts by mass of alicyclic epoxy resin, product name: Celloxide 2021P (manufactured by Daicel Corporation), 90 parts by mass of methylhexahydrophthalic anhydride as an acid anhydride curing agent, product name: MH700 (manufactured by New Japan Chemical co., ltd.), and 0.5 parts by mass of quaternary ammonium salt as a curing accelerator, product name: Nissan Cation M2-100 (manufactured by Nippon Oil & Fats Co., Ltd.).

25 % by volume of strontium titanate (manufactured by KCM Corporation) with an average particle diameter of 1.2 µm and 25 % by volume of fused silica with an average particle diameter of 19 µm, product name FB24 (manufactured by Denka Company Limited) were blended into the resin composition to prepare a nonlinear dielectric material composition (C).

Then, the nonlinear dielectric material composition (C) was vacuum-cast into a mold with model electrodes for evaluating electric field and dielectric constant, which had been preheated at 100 °C, to produce a cast product (C) for electrical tests under a primary curing condition of 100 °C for 3 hours and a secondary curing condition of 150 °C for 10 hours.

The glass transition temperature (Tg) of the nonlinear dielectric material composition (C) after the secondary curing was measured by the differential scanning calorimetry (DSC), and found to be 155 °C.

### [Comparative Example 2]

A resin composition was prepared, which contained 70 parts by mass of a bisphenol A epoxy resin, product name: JER828 (manufactured by Mitsubishi Chemical Corporation, epoxy equivalent 190), 30 parts by mass of an alicyclic epoxy resin, product name: Celloxide 2021P (manufactured by Daicel Corporation), 90 parts by mass of methylhexahydrophthalic anhydride as an acid anhydride curing agent, product name: HN5500 (manufactured by Hitachi Chemical Co., Ltd.), and 0.5 parts by mass of quaternary ammonium salt as a curing accelerator, product name: Nissan Cation M2-100 (manufactured by Nippon Oil & Fats Co., Ltd.).

For this resin composition, 50 % by volume of fused silica, product name: FB24 (manufactured by Denka Company Limited), with an average particle diameter of 19 µm was blended, to prepare a silica-filled epoxy material which is a conventional material. Then, the silica-filled epoxy material was vacuum-cast into a mold with model electrodes for evaluating electric field and dielectric constant, which had been preheated at 100 °C, to produce a cast product (D) for electrical tests under a primary curing condition of 100 °C for 3 hours and a secondary curing condition of 150 °C for 10 hours.

The glass transition temperature (Tg) of the silica-filled epoxy material after the secondary curing was measured by the differential scanning calorimetry (DSC), and found to be 152 °C.

### [Results of Evaluation]

With respect to the cast products (A) to (D) for electrical tests, the electric field and dielectric constant were measured.

FIG. 4 shows the measured data of electric field and dielectric constant of the cast products (A) to (D) for electrical tests.

From the results shown in FIG. 4, it was found that the cast products (A) and (B) for electrical tests, which were filled with barium titanate as the first filler, showed remarkable electric field nonlinearity in the electric field range between 5 kV/mm and 20 kV/mm. On the other hand, it was also found that no significant electric field nonlinearity occurred in the case of the cast product (C) filled with strontium titanate having a perovskite structure as the first filler.

In a model shown in FIG. 3 in which disk-shaped insulation spacers 3 and 6, each having a thickness of 30 mm, are disposed between a high voltage conductor 1 having a diameter of 100 mm and a metal container 2 having a diameter of 300 mm, the cast piece (A) for electrical tests was used as the insulation spacer 3, and the cast product (D) for electrical tests was used as a conventional insulation spacer 6, to analyze the electric field distribution between the high voltage conductor 1 and the metal container 2, and evaluate the effect of reducing the maximum electric field value by the nonlinear dielectric material.

FIG. 5 shows the results of the analysis of the electric field distribution between the high voltage conductor 1 and the metal container 2 for the cast products (A) and (D) for electrical tests.

The results for the field relaxation effect of the nonlinear dielectric material shown in FIG. 2 summarize the maximum electric field values on the surface of the high voltage conductor 1 shown in FIG. 5, and show the effect of reducing the maximum electric field value by the nonlinear dielectric material, i.e., the effect of improving the insulation performance.

In order to obtain an field relaxation effect that allows for 10 % size reduction of a device, specifically, when the total filling ratio of barium titanate and fused silica is 50 % by volume, FIG. 5 suggests that the filling ratio of barium titanate is preferably 15 % by volume or more, which in turn means that the filling ratio of fused silica is preferably 35 % by volume or less. Further, as can be seen from FIG. 5, since the insulation spacer 3 is produced by cast molding, too high a viscosity of the nonlinear dielectric material is detrimental to the production by cast molding. Due to these restrictions on the workability for cast molding, the filling ratio of barium titanate, which allows for production of the insulation spacer 3 by cast molding, is 40 % by volume or less.

As can be understood from the above, the maximum electric field value on the surface of the insulation spacer including the nonlinear dielectric material is reduced as compared to the conventional insulation spacer, and the insulation spacer including the nonlinear dielectric material shows high insulation performance. Thus, the insulation performance of the insulation spacer including the nonlinear dielectric material is improved; therefore, the insulation spacer can be used to provide a gas insulated switchgear with a smaller tank inner diameter and a superior insulation performance than the conventional gas insulated switchgear.

On the other hand, comparing the cases where the conventional spacer and the spacer of the present invention are respectively installed in the gas insulated buses having the same inner diameter, the conventional spacer is generally formed into a conical shape extended in a longitudinal direction of the bus as shown in FIG. 6 in order to increase the insulation distance. When the spacer described in the present embodiment is used, a spacer may have a shorter length in the longitudinal direction of the bus as shown in FIG. 1, which hence is excellent in manufacturability and is compact.

Some embodiments of the present invention have been described above, but these embodiments are presented as mere examples and should not be construed as limiting the scope of the present invention. These embodiments can be implemented in various other forms than mentioned above, and various omissions, substitutions or alterations may be made as long as they do not deviate from the gist of the present invention. These embodiments and modifications thereof are included in the scope and gist of the invention and also encompassed by the invention described in the claims and its equivalents.

### DESCRIPTION OF THE REFERENCE SIGNS

- 1: High voltage conductor
- 2: Metal container
- 3: Insulation spacer (nonlinear dielectric material)
- 4: Insulating gas
- 5: Electric field mitigation shield
- 6: Insulation spacer

## Claims

1. An insulation spacer for supporting connection between a high voltage conductor of a gas insulated switchgear and a metal container of the gas insulated switchgear, wherein:
the insulation spacer comprises a nonlinear dielectric material with dielectric constant which increases with increase in electric field,
the nonlinear dielectric material comprises a matrix resin filled with a first filler and a second filler,
the matrix resin is an epoxy compound having at least two epoxy groups per molecule,
the first filler is barium titanate, and
the second filler is silica or alumina.

2. The insulation spacer according to claim 1, wherein a filling ratio of the first filler in the nonlinear dielectric material is 10 % by volume to 45 % by volume, and
the second filler is filled in an amount such that a total filling ratio of the first filler and the second filler in the nonlinear dielectric material is 35 % by volume to 55 % by volume.

3. The insulation spacer according to claim 1 or 2, wherein an average particle diameter of the first filler is 0.1 µm to 15 µm.

4. The insulation spacer according to any one of claims 1 to 3, wherein the first filler is an aggregate.

5. The insulation spacer according to any one of claims 1 to 4, wherein a surface of the first filler is treated by a titanate coupling treatment or a silane coupling treatment.

6. The insulation spacer according to any one of claims 1 to 5, wherein the second filler is a fused silica with an average particle diameter of 1 µm to 30 µm.
